# EUROPÄISCHE PATENTSCHRIFT

(11) **EP 0 880 218 B1**
(45) Veröffentlichungstag und Bekanntmachung des Hinweises auf die Patenterteilung: **22.09.2004**
(21) Anmeldenummer: 98108463.5
(22) Anmeldetag: 08.05.1998
(51) Int. Cl.: H02K 11/02, H02K 5/22, H01R 13/66

(54) **Funkenstörter Elektromotor, insbesondere zum Antrieb eines Kraftfahrzeug-Gebläses**
Electrical motor with radio interference suppression, in particular for vehicle ventilator
Moteur électrique antiparasité, en particulier pour ventilateur d'automobile

(30) Priorität: 21.05.1997 DE 19721316
(43) Veröffentlichungstag der Anmeldung: 25.11.1998
(73) Patentinhaber: SIEMENS AKTIENGESELLSCHAFT, 80333 München (DE)
(72) Erfinder: Göb, Werner, 97273 Kürnach (DE); Hartmann, Uwe, Dipl.-Ing. (FH), 97956 Wenkheim (DE)

(56) Entgegenhaltungen:
- EP-A- 0 607 032
- DE-A- 4 419 929
- FR-A- 2 615 330
- GB-A- 1 592 619
- US-A- 4 384 223
- US-A- 4 727 274
- US-A- 4 845 393
- PATENT ABSTRACTS OF JAPAN vol. 1997, no. 02, 28. Februar 1997 (1997-02-28) -& JP 08 275478 A (KOBAYASHI HIDEO), 18. Oktober 1996 (1996-10-18)
- PATENT ABSTRACTS OF JAPAN vol. 17, no. 202 (E-1353), 20. April 1993 (1993-04-20) -& JP 04 344160 A (KUMASAKA TAIICHI), 30. November 1992 (1992-11-30)

## Beschreibung

Die Erfindung bezieht sich auf einen funkentstörten Elektromotor, insbesondere zum Antrieb eines Kraftfahrzeug-Gebläses, gemäß Patentanspruch 1; derartige in der Regel durch statorseitige Permanentmagnete erregte und rotorseitig mit einer an einen Kommutator angeschlossenen und über Verbindungsleitungen mit einer äußeren Anschlußeinheit versorgten Rotorwicklung müssen einem hohen Funkentstörgrad entsprechen; dazu sind in Serie mit der Rotorwicklung geschaltete Entstördrosseln und ein parallel zu der Rotorwicklung geschalteter Kondensator vorgesehen.

Üblicherweise werden die zur Entstörung notwendigen Bauteile im oder am Elektomotor selbst untergebracht; bei einem z.B. durch die DE 34 34 429 C2 bekannten funkentstörten Kommutator-Motor, insbesondere zum Antrieb von Kraftfahrzeug-Hilfsntrieben, sind die Entstördrosseln jeweils auf dem Rücken der Bürstentragarme eines den Kommutator versorgenden Hammer-Bürtenhaltersystem mechanisch befestigt und einerseits über Bürstenlitzen mit den Kommutator beschleifenden Bürsten und andererseits über eine vom Elektromotor lose Anschlußeinheit mit äußeren Versorgungs- bzw. Steueranschlüssen verbunden. Zur Fixierung und/oder Kontaktierung des Entstör-Kondensators ist an dem kommutatorseitigen Motorende ein Zwischenklemmbrett befestigt, in das Verbindungsleitungen zu der äußeren Anschlußeinheit münden und dort sowohl mit Anschlußbeinen des parallel geschalteten Entstörkondensators als auch mit Enden von Zwischenleitungen kontaktiert sind, die zu den bürstenabgewandten Anschlußenden der Entstördrosseln führen.

Bei einem durch die DE 85 27 874 U1 bekannten Kommutatormotor in geschlossener Bauart ist eine in eine Öffnung des Motorgehäuses einsetzbare Kunststoff-Bürstenbrücke mit einem einstückig angeformten, nach außen ragenden Steckergehäuse mit Anschlusssteckern für äußere Steuerungs- bzw. Versorgungsleitungen versehen; die motorseitigen Enden der Anschlussstecker sind mit zu bürstennahen Entstördrosseln führenden Zwischenleitungen vercrimpt, wobei in den Crimpanschlüssen Anschlussbeine eines in dem Steckergehäuse angeordneten Entstörkondensators mitkontaktiert sind.

Gemäß Aufgabe vorliegender Erfindung soll eine zum Einbau in ein Gebläse, insbesondere Kraftfahrzeug-Gebläse und im Sinne einer freien Gestaltung des zumindest teilweise den Elektromotor übergreifenden Ventilatorrades vorteilhafte kompakte Bauweise des Elektromotors bei gleichzeitig aufwandsarmer Fertigung und Montage erreicht werden.

Die Lösung dieser Aufgabe gelingt durch die Lehre des Patentanspruchs 1; eine vorteilhafte Ausgestaltung der Erfindung ist Gegenstand des Unteranspruchs.

Eine Kondensator-Anschlusseinheit mit den ersten drei Teilmerkmalen des Anspruchs 1 ist durch die EP 0660 454 A2 bekannt.

Durch die erfindungsgemäße Anordnung des Kondensators in der äußeren Anschlusseinheit kann auf ein gesondertes Zwischenklemmbrett mit daran gehaltertem Kondensator und auf eine gesonderte Auftrennung der Verbindungsleitung zwischen der äußeren Anschlusseinheit und den Entstördrosseln verzichtet werden, so dass sich eine, insbesondere axial, kompaktere Elektromotor-Baugröße und gleichzeitig ein vereinfachter Fertigungs- und Montageaufwand zur Anordnung und zum Anschluss der Funkentstör-Bauteile erreichen lässt. Bei einer Anschlusseinheit, die aus einem motorzugewandten freigestaltbaren ersten Teil und einem motorabgewandten, hinsichtlich seines Designs kundenspezifisch vorgegebenen zweiten Teil besteht, ist dabei die Aufnahme bzw. Kontaktierung des Kondensators in dem motorzugewandten ersten Teil der Anschlusseinheit vorgesehen, wobei in fertigungs- und montagetechnisch aufwandsarmer Weise die Anschlussbeine des Kondensators in einem Arbeitsgang mit den Enden der Verbindungsleitung zu der Motorwicklung bzw. zu den Bürsten gleichzeitig in einem motorzugewandten Crimpanschluss von in der Anschlusseinheit aufgenommenen einteiligen Anschluss-Kontakt-Teilen mit einem motorzugewandten Kontaktteil für die Verbindungsleitungen sowie des Kondensators in dem ersten Teil der Anschlusseinheit und einem motorabgewandten Kontaktteil für ein kundenseitiges Gegenkontaktteil in dem zweiten Teil der Anschlusseinheit kontaktiert sind.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert; darin zeigen:
- FIG 1: in einem Axial-Teilschnitt einen erfindungsgemäß entstörten Elektromotor mit auf einem herausragenden Ende der Rotorwelle aufgesetzten Gebläserad;
- FIG 2: in einem Axial-Teilschnitt einen in bekannter Weise entstörten Elektromotor mit auf einem herausragenden Ende der Rotorwelle aufgesetzten Gebläserad;
- FIG 3: eine Anschlusseinheit mit erfindungsgemäß in dieser angeordnetem Entstörkondensator;
- FIG 4: eine Anschlusseinheit mit in bekannter Weise im Elektromotor angeordnetem Entstörkondensator;
- FIG 5: ein von einer Anschlusseinheit aufgenommenes Anschluss-Kontakt-Teil in Ansicht auf seine Breitseite;
- FIG 6: ein von einer Anschlusseinheit aufgenommenes Anschluss-Kontakt-Teil in Ansicht auf seine Schmalseite.

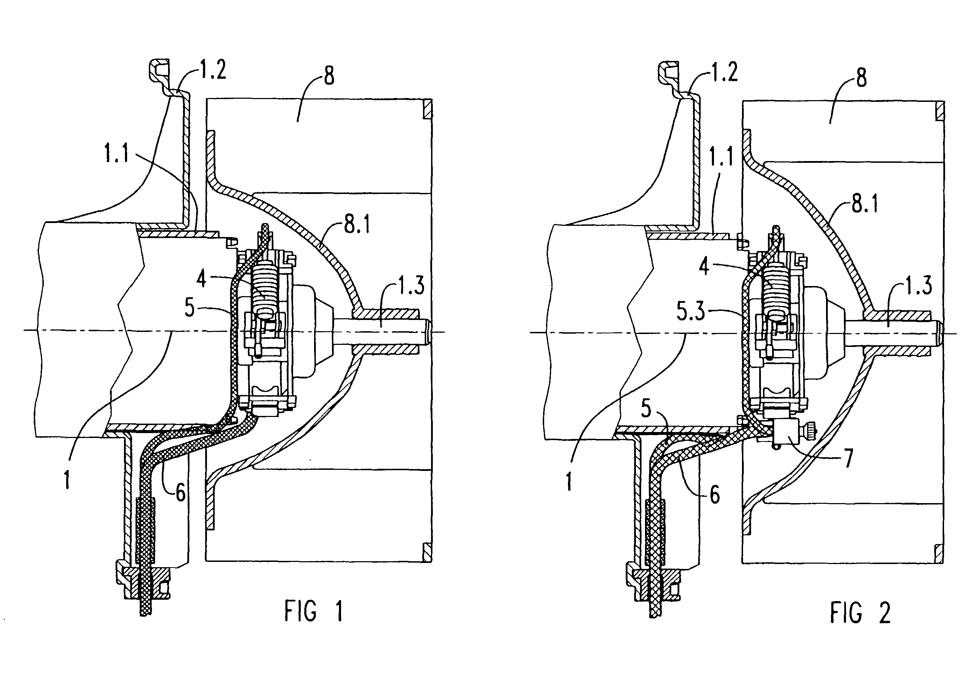

FIG 1,2 zeigen das kommutatorseitige Ende eines als Elektromotor 1 vorgesehenen Kommutatormotors, dessen Motorgehäuse 1.1 über eine Motorhalterung 1.2 in einer Aufnahme, insbesondere in einem Gebläsegehäuse, fixierbar ist und aus dessen rechter Stirnseite des Motors das Ende einer Rotorwelle 1.3 herausragt, auf das ein Gebläserad 8 mit einem Naben-Dom 8.1 aufgesetzt ist.

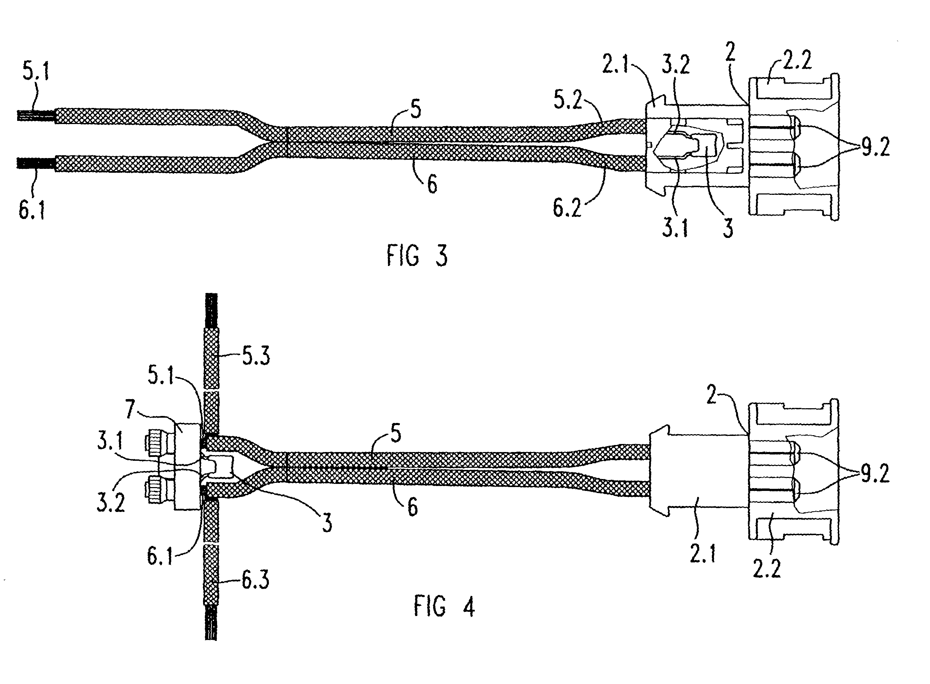

Zur Funkentstörung des Kommutatormotors sind jeweils auf dem Rücken von Hammerbürstenhaltern Entstördrosseln 4 angeordnet, von denen in FIG 1,2 jeweils eine Entstördossel 4 sichtbar ist. Gemäß der bekannten Ausführung nach FIG 2 bzw. FIG 4 ist als ein weiteres Entstörbauteil ein Kondensator 3 vorgesehen, der - wie aus der eingangs genannten DE 34 34 429 C2 näher ersichtlich - von einer Kondensator-Kontaktierungs-Einheit 7 aufgenommen wird, die an dem kommutatorseitigen Lagerbügel des Elektromotors 1 gehaltert ist und gleichzeitig auch der Kontaktierung zwischen den Leitungsenden von zu einer äußeren Anschlusseinheit 2 führenden Verbindungsleitungen 5,6 einerseits und gesonderten Zwischenleitungen 5.3;6.3 zu den Entstördrosseln 4 andererseits dienen.

FIG 4 zeigt eine der bekannten Lösung gemäß FIG 2 entsprechende Anschlusseinheit 2 mit einem motorzugewandten ersten Teil 2.1 und einem motorabgewandten, insbesondere hinsichtlich seines Design kundenspezifisch auszubildenden, zweiten Teil 2.2, das motorabgewandte Kontaktteile 9.2 in Form von Flachzungen zur Kontaktierung mit einem kundenseitigen Gegenstecker aufnimmt. Von der Anschlusseinheit 2 führen Verbindungsleitungen 5;6 zu der am kommutatorseitigen Ende des Elektromotors 1 zu fixierenden Kondensator-Kontaktierungs-Einheit 7, in der die Leitungsenden 5.1;6.1 der Verbindungsleitungen 5;6 sowohl mit den zu den Entstördrosseln 4 führenden Wicklungsenden von Zwischenleitungen 5.3;6.3 als auch mit Anschlussbeinen 3.1;3.2 des Entstörkondensators 3 kontaktiert sind.

FIG 1 bzw. FIG 3 zeigen in jeweils entsprechender Darstellung die erfindungsgemäß verbesserte Lösung im Vergleich zu FIG 2 bzw. FIG 4.

Wie insbesondere aus FIG 3 ersichtlich, ist erfindungsgemäß der Entstörkondensator 3 in die Anschlusseinheit 2 und dort zweckmäßigerweise in den motorzugewandten, keiner kundenseitigen Designvorschrift unterworfenen ersten Teil 2.1 der Anschlusseinheit 2 verlegt. Von dem ersten Teil 2.1 der Anschlusseinheit 2 führen die Verbindungsleitungen 5;6 mit ihren motorseitigen Enden 5.1;6.1 ohne Trennung - wie im bekannten Fall gemäß FIG 4 notwendig - direkt zu den Entstördrosseln 4. Die motorabgewandten Enden 5.2;6.2 der Verbindungsleitung 5;6 sind in fertigungs- und montagetechnisch einfacher Weise in dem Anschlussteil 2 mit den Anschlussbeinen 3.1;3.2 des Entstörkondensators 3 unmittelbar in einem Arbeitsgang - wie im folgenden näher erläutert - kontaktierbar.

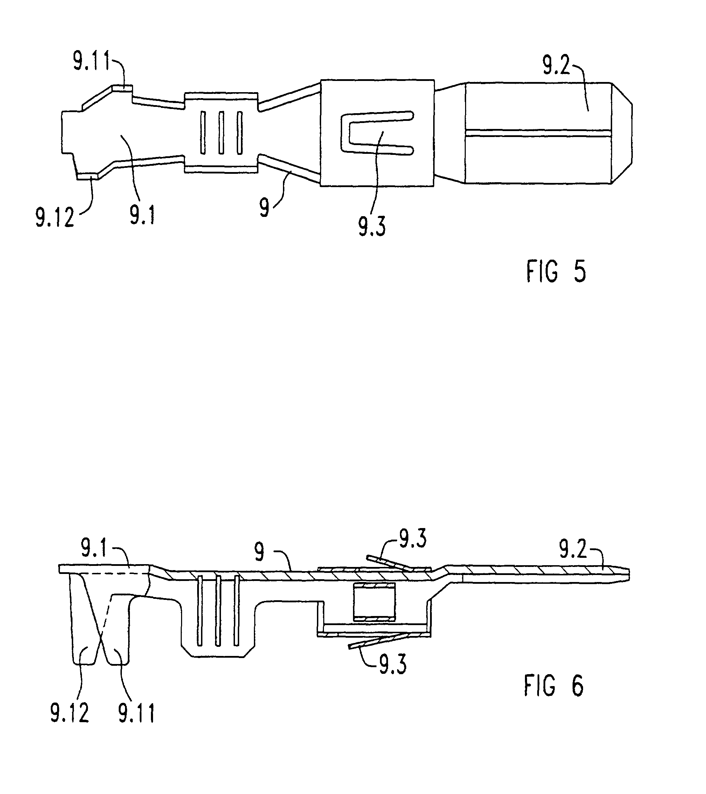

Zur fertigungs- und montagetechnisch vereinfachten Kontaktierung zwischen den motorabgewandten Enden 5.2;6.2 der Verbindungsleitungen 5;6 einerseits mit den Anschlussbeinen 3.1;3.2 des Kondensators 3 als auch mit dem motorabgewandten Kontaktteilen 9.2;9.2, insbesondere in Form von Flachzungen, andererseits ist gemäß FIG 5,6 jeweils ein axial durchgehendes Anschluss-Kontakt-Teil 9 vorgesehen, das einerseits jeweils aus dem motorabgewandten Kontaktteil 9.2, insbesondere in Form einer Flachzunge, und andererseits aus einem motorzugewandten Kontaktteil 9.1 in Form eines Crimpanschlusses mit einem dazwischenliegenden Einrastbereich besteht; der Einrastbereich weist in einer korrespondierenden Aufnahme der Anschlusseinheit 2 festlegbare Fixierteile 9.3 in Form von Federzungen 9.3 auf. Das nach Art eines Crimpanschlusses ausgeführte motorzugewandte Kontaktteil 9.1 umfasst Crimpanschluss-Wandteile 9.11;9.12, die nach Einlegen der motorabgewandten Enden 5.2;6.2 der Verbindungsleitungen 5;6 und der Anschlussbeine 3.1;3.2 des Kondensators 3 unter Kontaktierungseinschluss der eingelegten Anschlussteile aufeinander zubiegbar sind.

Es dürfte ersichtlich sein, dass lediglich durch geringe Abänderung einer vorhanden Anschlusseinheit 2 in ihrem motorzugewandten ersten Teil 2.1 die einfache Aufnahme und Kontaktierung eines Entstörkondensators 3 außerhalb des Elektromotors 1 möglich ist.

## Patentansprüche

1. Funkentstörter Elektromotor insbesondere zum Antrieb eines Kraftfahrzeug-Gebläses,
- mit zumindest einem Entstör-Kondensator (3) parallel zu zwei Wicklungsanschlüssen des Elektromotors (1), die mittels aus dem Elektromotor herausgeführter Verbindungsleitungen (5;6) mit einer äußeren, losen, selbständigen Anschlusseinheit (2) verbunden sind;
**gekennzeichnet durch** eine Ausbildung
- mit eineir Aufnahme des Entstör-Kondensators (3) in der Anschlusseinheit (2);
- mit einem Anschluss des Entstör-Kondensators (3) an motorabgewandten Enden (5.2;6.2) der Verbindungsleitungen (5;6) in der Anschlusseinheit (2)
- mit von der Anschlusseinheit (2) aufgenommenen einteiligen Anschluss-Kontakt-Teilen (9;9) mit einem motorzugewandten Kontaktteil (9.1) für die Verbindungsleitungen (5;6) in einem motorzugewandten ersten Teil (2.1) der Anschlusseinheit (2) und einem motorabgewandten Kontaktteil (9.2) für ein kundenseitiges Gegenkontaktteil in einem motorabgewandten zweiten Teil (2.2) der Anschlusseinheit (2);
- mit einer Ausbildung des motorzugewandten Kontaktteils (9.1) mit einem Crimpanschluss (9.11;9.12) für die Verbindungsleitungen (5;,6);
- mit einem gemeinsamem Crimpanschluss (9.11;9.12) für jeweils ein Anschlussbein (3.1;3.2) des Kondensators (3) und ein motorabgewandtes Ende (5.2;6.2) der Verbindungsleitungen (5;6).

2. Funkentstörter Elektromotor nach dem vorhergehenden Anspruch
- mit einer freien, kundenabhängigen Gestaltung des motorzugewandten ersten Teils (2.1) der Anschlusseinheit (2) und mit einer kundenspezifischen Gestaltung des motorabgewandten zweiten Teils (2.2) der Anschlusseinheit (2);
- mit einer Aufnahme bzw. Kontaktierung des Kondensators (3) in dem motorzugewandten ersten Teil (2.1) der Anschlusseinheit (2).

## Claims

1. Electric motor with radio frequency interference suppression, in particular for driving a vehicle ventilator,
- having at least one interference suppression capacitor (3) in parallel with two winding terminals of the electric motor (1) which are connected to an external, loose, independent connection unit (2) by means of connecting leads (5; 6) brought out from the electric motor;
**characterised by** an embodiment
- having a receptacle of the interference suppression capacitor (3) in the connection unit (2);
- having a terminal of the interference suppression capacitor (3) at ends (5.2; 6.2) of the connecting leads (5; 6) in the connection unit (2), said ends being turned away from the motor;
- having single-piece terminal contact parts (9; 9) accommodated by the connection unit (2) with one contact part (9.1) turned towards the motor for the connecting leads (5; 6) in a first part (2.1) of the connection unit (2) turned towards the motor and one contact part (9.2) turned away from the motor for a customer-side opposite contact part in a second part (2.2) of the connection unit (2) turned away from the motor;
- having an embodiment of the contact part (9.1) turned towards the motor with a crimp snap-in connection (9.11; 9.12) for the connecting leads (5; 6);
- having a common crimp snap-in connection (9.11; 9.12) for in each case one terminal leg (3.1; 3.2) of the capacitor (3) and an end (5.2; 6.2) of the connecting leads (5; 6) facing away from the motor.

2. Electric motor with radio frequency interference suppression according to the preceding claim,
- having a free, customer-independent embodiment of the first part (2.1) of the connection unit (2) turned towards the motor and having a customer-specific embodiment of the second contact part (2.2) of the connection unit (2) turned away from the motor;
- having a receptacle or contacting means of the capacitor (3) in the first part (2.1) of the connection unit (2), said first part facing the motor.

## Revendications

1. Moteur électrique antiparasité, en particulier pour entraîner un ventilateur de véhicule automobile,
- comportant au moins un condensateur d'antiparasitage (3) en parallèle avec deux raccordements de bobines du moteur électrique (1), qui sont reliés, au moyen de conducteurs de liaisons (5; 6) sortant du moteur électrique, à une unité (2) extérieure, autonome, séparée, de raccordement,
**caractérisé par** une réalisation
- comportant une implantation du condensateur d'antiparasitage (3) dans l'unité de raccordement (2),
- comportant un raccordement du condensateur d'antiparasitage (3) aux extrémités (5.2; 6.2), situées côté opposé au moteur, des conducteurs de liaisons (5; 6) dans l'unité de raccordement (2),
- comportant des pièces de contact de raccordement (9; 9), formant une seule pièce, implantées dans l'unité de raccordement (2), comportant une pièce de contact (9.1), côté moteur, pour les conducteurs de liaisons (5; 6) dans une première pièce (2.1), tournée vers le moteur, de l'unité de raccordement (2) et une pièce de contact (9.2), du côté opposé au moteur, pour une contre-pièce de contact, côté client, dans une deuxième pièce (2.2), du côté opposé au moteur, de l'unité de raccordement (2),
- comportant la réalisation de la pièce de contact (9.1), tournée vers le moteur, avec un raccordement par sertissage mp (9.11; 9.12) pour les conducteurs de liaisons (5; 6),
- comportant un raccordement commun par sertissage p (9.11; 9.12) pour chaque fois une tige de raccordement (3.1; 3.2) du condensateur (3) et pour une extrémité (5.2; 6.2), du côté opposé au moteur, des conducteurs de liaisons (5; 6).

2. Moteur électrique antiparasité suivant la revendication précédente
- comportant une conception libre, dépendant du client, de la première partie (2.1), tournée vers le moteur, de l'unité de raccordement (2) et comportant une conception, spécifique au client, de la deuxième partie (2.2), opposée au moteur de l'unité de raccordement (2),
- comportant respectivement une implantation ou une mise en contact du condensateur (3) dans la première partie (2.1), tournée vers le moteur, de l'unité de raccordement (2).
